# EUROPEAN PATENT SPECIFICATION

(11) **EP 1 852 641 B1**
(45) Date of publication and mention of the grant of the patent: **10.12.2008**
(21) Application number: 07107543.6
(22) Date of filing: 04.05.2007
(51) Int. Cl.: F16K 15/03

(54) **Split flapper check valve including a torsion spring wear reduction mechanism**
Sperrventil mit geteilter Klappe und Mechanismus zum Reduzieren der Drehfederabnutzung
Clapet de retenue de volets d'intrados comportant un mécanisme de réduction d'usure du ressort de torsion

(30) Priority: 05.05.2006 US 418799
(43) Date of publication of application: 07.11.2007
(73) Proprietor: Honeywell International Inc., Morristown NJ 07960 (US)
(72) Inventor: Sugai, Maureen, Phoenix, AZ 85048 (US); Tornquist, David B, Chandler, AZ 85226 (US); Sedacca, Lisa, Scottsdale, AZ 85254 (US)
(74) Representative: Haley, Stephen

(56) References cited:
- DE-A1- 3 402 203
- GB-A- 2 120 361
- US-A- 4 825 902
- US-A- 5 301 709
- US-A1- 2006 026 965

## Description

The present invention relates to split flapper check valves and, more particularly, to a split flapper check valve that has reduced wear of a torsion spring implemented therein.

Split flapper check valves (see for instance US-A-5 301 709) may be used in any one of numerous circumstances in which air flow may need to be regulated. In one example, the valve is implemented in an air distribution system. Typically, the air distribution system includes an inlet duct that receives air from an air source and two or more outlet ducts that exhaust the received air to a desired area within the aircraft, such as, for example, to an aircraft cabin or an underfloor section of the aircraft. The valve is disposed between the inlet and outlet ducts to prevent reverse flow in the air distribution system by moving between open and closed positions.

Generally, the valve includes a valve body having an opening formed therethrough, a shaft that extends across the opening, two valve plates rotationally mounted on the shaft via lugs, and a torsion spring also mounted on the shaft between the lugs. The ends of the torsion spring are coupled to the two valve plates. During operation, when the valve is in the closed position, the torsion spring maintains the valve plates seated against the valve body. When airflow impinges on an upstream side of the valve plates, one or both of the valve plates unseat from the valve body to allow air to flow through the valve body opening.

Although split flapper check valves, such as the one described above, generally operate safely and reliably, these valves can exhibit certain drawbacks. For example, in some cases, the torsion spring may have a length that is less than the distance between the lugs. As a result, the torsion spring position may shift during operation and may undesirably abrade against the shaft, lugs, or the valve plates. In addition, since the torsion spring reacts the closing torque against the hinge pin, wear of the spring against the hinge pin may occur when the flappers rotate to the open and closed positions. Consequently, the spring and/or the valve plates may prematurely wear and may need to be repeatedly replaced.

Accordingly, there is a need for an improved split flapper check valve configuration that includes a torsion spring that does not abrade against the shaft or valve plate. In addition, it is desirable for the valve to be relatively inexpensive to implement. Furthermore, other desirable features and characteristics of the present invention will become apparent from the subsequent detailed description and the appended claims, taken in conjunction with the accompanying drawings and the foregoing technical field and background.

The present invention provides a split flapper check valve that includes a torsion spring wear reduction mechanism to at least inhibit the torsion spring from abrading against the shaft or valve plate.

In one embodiment, and by way of example only, a split flapper check valve includes a valve body, a shaft, a first valve plate, a second valve plate, a torsion spring, a first bushing, and a second bushing. The valve body includes one or more flow passages formed therethrough. The shaft is coupled to the valve body. The first valve plate is rotationally mounted on the shaft, and includes a first lug extending therefrom that has a shaft opening formed therethrough through which the shaft extends. The second valve plate is rotationally mounted on the shaft, and includes a first lug extending therefrom that has a shaft opening formed therethrough through which the shaft extends. The second valve plate first lug is spaced apart from the first valve plate first lug. The torsion spring is mounted on, and surrounds at least a portion of, the shaft between the first and second valve plate first lugs, and has at least a first end and a second end. The first bushing is mounted on the shaft and has an axial section and a radial section. The axial section is disposed between the torsion spring and the shaft, and the radial section extends radially outwardly from the axial section and is disposed between the torsion spring first end and the first valve plate first lug. The second bushing is mounted on the shaft and has an axial section and a radial section. The axial section is disposed between the torsion spring and the shaft, and the radial section extends radially outwardly from the axial section and is disposed between the torsion spring second end and the second valve plate first lug.

Other features and advantages of the preferred split flapper check valve torsion spring reduction mechanism will become apparent from the following detailed description, taken in conjunction with the accompanying drawings which illustrate, by way of example, the principles of the invention.

### IN THE DRAWINGS

FIG. 1 is a perspective view of an exemplary split flapper check valve;

FIG. 2 is a cross section view of the split flapper check valve depicted in FIG. 1 taken along line 2-2;

FIG. 3 is a close up of a portion of the split flapper check valve shown in FIG. 2; and

FIG. 4 is a cross section view of another exemplary split flapper check valve.

The following detailed description of the invention is merely exemplary in nature and is not intended to limit the invention or the application and uses of the invention. Furthermore, there is no intention to be bound by any theory presented in the preceding background of the invention or the following detailed description of the invention.

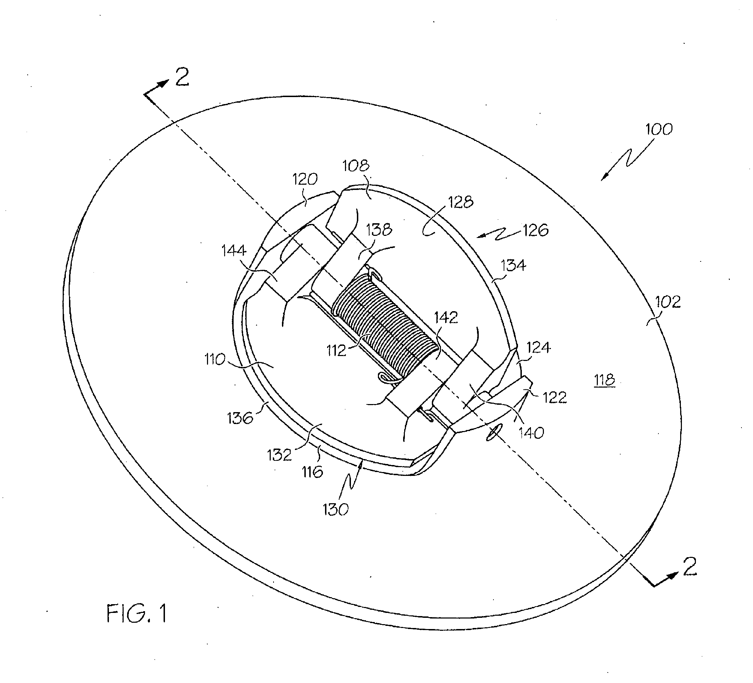

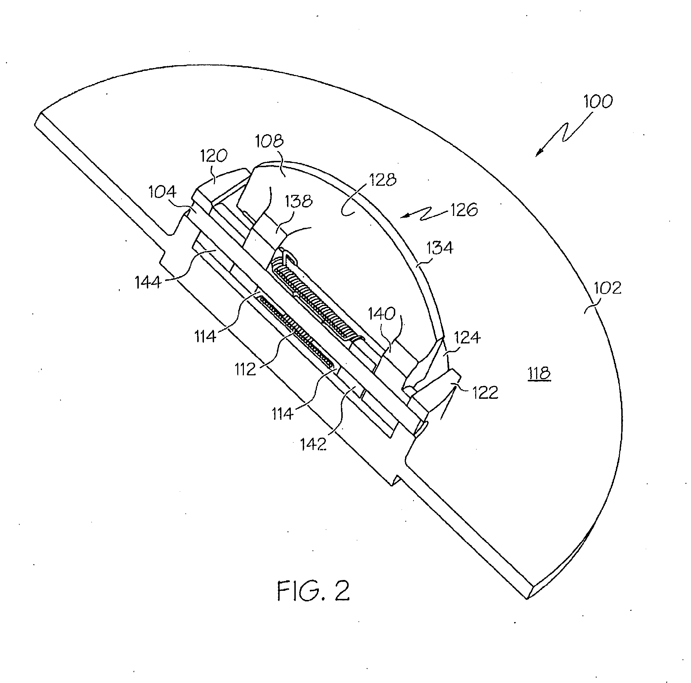

Turning now to FIGS. 1 and 2, a perspective view and a cross section view, respectively of an exemplary split flapper check valve 100 are illustrated. The check valve 100 includes a valve body 102, a shaft 104, one or more valve plates 108, 110, one or more torsion springs 112, and one or more bushings 114 (not visible in FIG. 1). The valve body 102 is configured to be coupled between two non-illustrated duct segments and includes a seat 116 with which the one or more valve plates 108, 110 contact when in a closed position. The valve body 102 includes an annular shroud 118 and a pair of mounting flanges 120, 122. The annular shroud 118 has one or more flow passages (124) formed therein through which air flows when the one or more valve plates 108, 110 are in an open position. The mounting flanges 120, 122 extend from the annular shroud 118 in a downstream direction, and each includes a shaft opening within which each end of the shaft 104 is disposed.

The valve plates 108, 110, as alluded to above, are configured to move between an open position to unseal the one or more flow passages 124, and a closed position to substantially seal the one or more flow passages 124. It is noted that in FIGS. 1 and 2, valve plate 108 is depicted in the open position, and in FIG. 1, valve plate 110 is depicted in the closed position. Each valve plate 108, 110 is rotationally mounted on the shaft 120, 122 and has an upstream face 126, 128 and a downstream face 130, 132. Each upstream face 126, 128 includes an outer periphery 134, 136 that contacts the valve seat 116 when in the closed position. Each downstream face 130, 132 includes a pair of lugs, specifically, a first pair of lugs 138, 140, and a second pair of lugs 142, 144. The lugs 138, 140, 142, 144 extend from their corresponding downstream faces 130, 132 in the downstream direction. Each lug 138, 140, 142, 144 has an opening formed therein through which the shaft 104 extends. Although one lug 138 of the first pair of lugs 138, 140 is shown disposed between the second pair of lugs 142, 144, it will be appreciated that in alternate embodiments, both lugs of the first pair of lugs 138, 140 may be disposed between the lugs of the second pair of lugs 142, 144, or vice versa.

During operation, the valve plates 108, 110 are preferably biased toward the closed position via a torsion spring 112. In the depicted embodiment, the torsion spring 112 surrounds at least a portion of the shaft 114, between the lugs 138, 140, 142, 144. In particular, the torsion spring 112 is coupled to one lug 138 of the first pair of lugs 138, 140, to one lug 142 of the second pair of lugs 142, 144, and contacts each of the valve plates 108, 110 to supply a torsion force that biases the valve plates 108, 110 toward the closed position. If, however, a differential pressure between the upstream faces 126, 128 and downstream faces 130, 132 of the valve plates 108, 110 exceeds a predetermined positive differential pressure value, one or both of the valve plates 108, 110 moves, against the bias of the torsion spring 112, to the open position. Before proceeding, it is noted that the torsion spring 112 may be coupled to the valve plates 108, 110, to thereby supply the torsion force thereto, in any one of numerous ways, not just by contacting each valve plate 108, 110, as in the depicted embodiment.

To maintain the torsion spring 112 in a substantially fixed position relative to the shaft 104, the bushings 114 are included. The bushings 114 are mounted on the shaft 104 and are preferably made of material that does not abrade against the shaft 104, the torsion spring 112, the lugs 138, 140, 142, 144 or any other components of the check valve 100 with which it contacts. The particular material selected depends on the materials from which the shaft 104, the torsion spring 112, the lugs 138, 140, 142, 144, and other components are constructed. In one exemplary embodiment, the shaft 104, the torsion spring 112, and the lugs 138, 140, 142, 144 are made from stainless steel; in such case, the bushings 114 may be constructed from cobalt alloys, or any other suitable material.

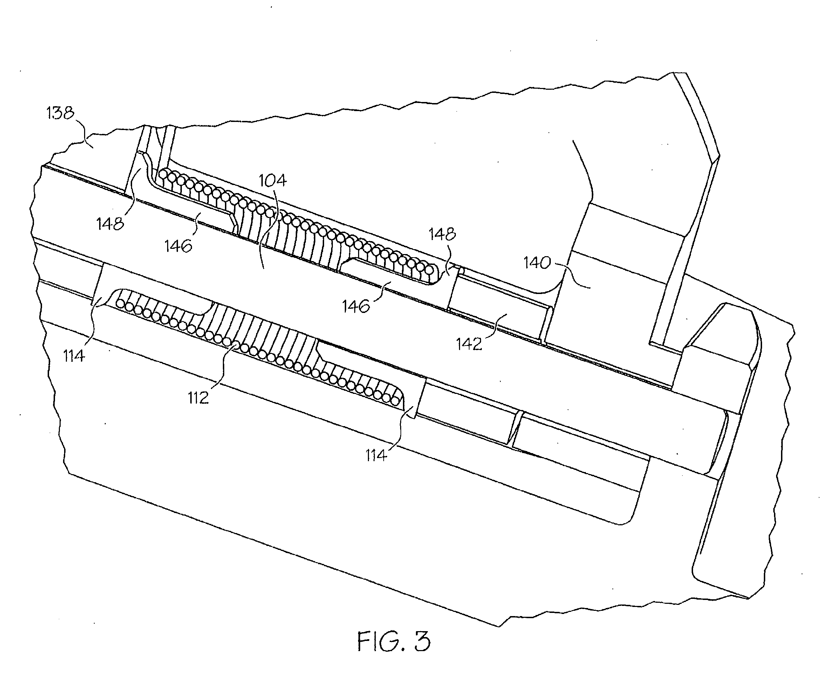

As shown in more detail in FIGs. 3, each bushing 114 includes an axial section 146 and a radial section 148. The axial section 146 is configured to have a diameter that is smaller than an inner diameter of the torsion spring 112 so that it may be inserted therein; consequently, when the check valve 100 is fully assembled, the axial section 146 is disposed between the shaft 104 and the spring 112. The radial section 148 extends radially outwardly from a portion of the axial section 146 and has an outer peripheral diameter that is greater than an outer diameter of the torsion spring 112. The radial section 148, at least in the depicted embodiment, seats agains a portion of the of the lugs 138, 140, 142, 144.

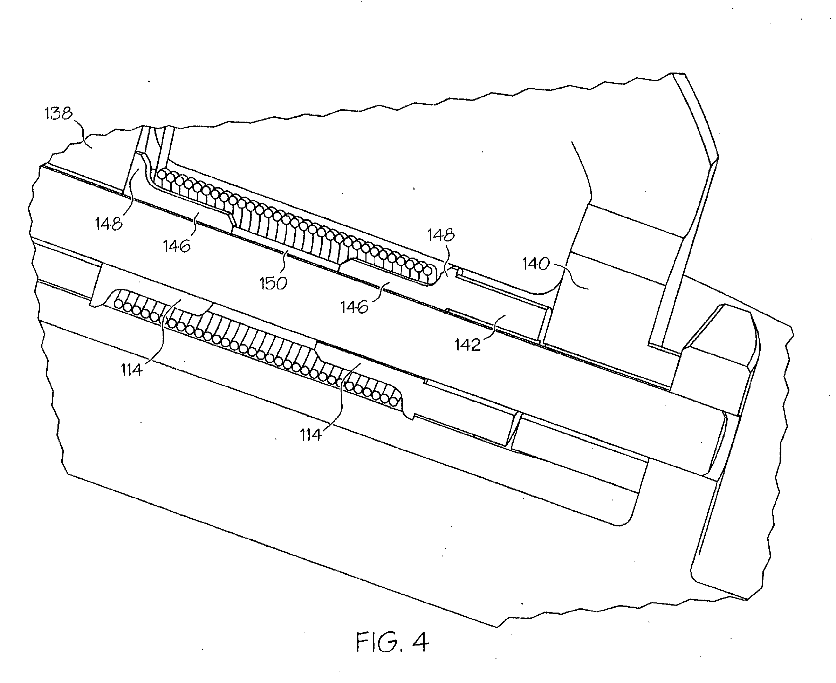

The bushings 114 are disposed one each at either end of the torsion spring 112 so that the radial section 148 of each of the bushings 114 is disposed between the torsion spring 112 and an adjacent lug 138, 140. It will be appreciated that in some cases, the torsion spring 112 may be short relative to the distance between the lugs lugs 138, 140. In such case, the bushing 114 radial sections 148 may be relatively thick. In other embodiments, the torsion spring 112 may be long relative to the distance between the lugs 138, 140, or the torsion spring 112 may have relatively small inner and outer diameters and may need additional support along its length. In such case, as shown in FIG. 4, a tubular sleeve 150 having an outer diameter that is smaller than the torsion spring 112 inner diameter may be positioned between the bushings 114. Although the bushings 114 are depicted in FIG. 3 as separate pieces from other components of the split flapper check valve 100, it will be appreciated that in some embodiments, such as the embodiment depicted in FIG. 4, one or more of the bushings 114 may be formed as an integral part of the lugs 138, 140.

A split flapper check valve 100 has now been provided that includes a torsion spring that does not abrade against the shaft or valve plate. In addition, the valve to be relatively inexpensive to implement.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A split flapper check valve (100) comprising:
a valve body (102) including one or more flow passages (124) formed therethrough;
a shaft (104) coupled to the valve body (102);
a first valve plate (108) rotationally mounted on the shaft (104), the first valve plate (108) including a first lug (138) extending therefrom that has a shaft opening formed therethrough through which the shaft (104) extends;
a second valve plate (110) rotationally mounted on the shaft (104), the second valve plate (110) including a first lug (142) extending therefrom that has a shaft opening formed therethrough through which the shaft (104) extends, the second valve plate first lug (142) spaced apart from the first valve plate first lug (138);
a torsion spring (112) mounted on, and surrounding at least a portion of, the shaft (104) between the first and second valve plate (108) first lugs (138,142), the torsion spring (112) having at least a first end and a second end;
a first bushing (114) mounted on the shaft (104) and having an axial section (146) and a radial section (148), the axial section (146) disposed between the torsion spring (112) and the shaft (104), the radial section (148) extending radially outwardly from the axial section (146) and disposed between the torsion spring first end and the first valve plate first lug (138); and
a second bushing (114) mounted on the shaft (104) and having an axial section (146) and a radial section (148), the axial section (146) disposed between the torsion spring (112) and the shaft (104) and the radial section (148) extending radially outwardly from the axial section (146) and disposed between the torsion spring second end and the second valve plate first lug (142).

2. The split flapper check valve of claim 1, further comprising:
a sleeve mounted on, and surrounding at least a portion of, the shaft (104) and disposed between the first and the second bushings (114).

3. The split flapper check valve of claim 2, wherein the sleeve has an outer diameter that is less than an inner diameter of the torsion spring (112).

4. The split flapper check valve of claim 1, wherein the torsion spring (112) has an outer diameter, the first bushing radial section (148) each has a diameter, and the torsion spring outer diameter is less than the first bushing radial section (148) diameter.

5. The split flapper check valve of claim 1, wherein the first bushing (114) is coupled to the first valve plate first lug (138).

6. The split flapper check valve of of claim 5, wherein the second bushing (114) is coupled to the second valve plate first lug (138).

7. The split flapper check valve of claim 1, wherein:
a first portion of the torsion spring (112) is coupled to the first valve plate first lug (138) and a second portion of the torsion spring (112) is coupled to the second valve plate first lug (138).

8. The split flapper check valve of claim 1, wherein:
the first valve plate (108) includes a second lug (138) spaced apart from the first valve plate first lug (138);
the second valve plate first lug (138) is disposed between the first valve plate first and second lugs (138);
the torsion spring (112) is disposed between the first valve plate first lug (138) and the second valve plate first lug (138).

9. The split flapper check valve of claim 8, wherein the second valve plate (108) includes a second lug (142) disposed outwardly of the first valve plate (108) first and second lugs (138).

10. A split flapper check valve (100) comprising:
a valve body (102) including one or more flow passages (124) formed therethrough;
a shaft (104) coupled to the valve body (102);
a first valve plate (108) rotationally mounted on the shaft (104), the first valve plate (108) including a first and a second lug (138,140) extending therefrom, each lug having a shaft opening formed therethrough through which the shaft (104) extends;
a second valve plate (110) rotationally mounted on the shaft (104), the second valve plate (110) including a first and a second lug (142,144) extending therefrom, each lug having a shaft opening formed therethrough through which the shaft (104) extends, the second valve plate first lug (142) disposed between the first valve plate first and second lugs (138,140) and including an axially extending section and a radially extending section formed thereon;
a torsion spring (112) including a first portion surrounding the shaft (104) between the first and second valve plate lugs, and a second portion mounted on the axially extending section of the second valve plate first lug (142), the torsion spring (112) having a first end and a second end; and
a bushing (114) section extending from the first valve plate first lug (138) and mounted on the shaft (104), the bushing (114) section having an axial section (146) and a radial section (148), the axial section (146) extending axially from the first valve plate first lug (138) and disposed between the torsion spring (112) and the shaft (104), and the radial section (148) extending radially outwardly from the axial section (146) and disposed between the torsion spring (112) end and the first valve plate first lug (138).

## Patentansprüche

1. Sperrventil (100) mit geteilter Klappe mit
einem Ventilkörper (102), der einen oder mehrere durch ihn hindurch ausgebildete Strömungsdurchgänge (124) aufweist,
einer an den Ventilkörper (102) gekoppelten Welle (104),
einer ersten Ventilscheibe (108), die drehungsmäßig an der Welle (104) montiert ist und eine erste sich davon erstreckende Nase (138) aufweist, durch die eine Wellenöffnung ausgebildet ist, durch die sich die Welle (104) erstreckt,
einer zweiten Ventilscheibe (110), die drehungsmäßig an der Welle (104) montiert ist und eine erste sich davon erstreckende Nase (142) aufweist, durch die eine Wellenöffnung ausgebildet ist, durch die sich die Welle (104) erstreckt, wobei die erste Nase (142) der zweiten Ventilscheibe von der ersten Nase (138) der ersten Ventilscheibe beabstandet ist,
einer Drehfeder (112), die an der Welle (104) zwischen den ersten Nasen (138, 142) der ersten und der zweiten Ventilscheibe (108) montiert ist und mindestens einen Abschnitt davon umgibt, wobei die Drehfeder (112) mindestens ein erstes Ende und ein zweites Ende hat,
einer ersten Buchse (114), die an der Welle (104) montiert ist und einen axialen Abschnitt (146) und einen radialen Abschnitt (148) hat, wobei der axiale Abschnitt (146) zwischen der Drehfeder (112) und der Welle (104) angeordnet ist und sich der radiale Abschnitt (148) vom axialen Abschnitt (146) radial nach außen erstreckt und zwischen dem ersten Ende der Drehfeder und der ersten Nase (138) der ersten Ventilscheibe angeordnet ist, und einer zweiten Buchse (114), die an der Welle (104) montiert ist und einen axialen Abschnitt (146) und einen radialen Abschnitt (148) hat, wobei der axiale Abschnitt (146) zwischen der Drehfeder (112) und der Welle (104) angeordnet ist und sich der radiale Abschnitt (148) vom axialen Abschnitt (146) radial nach außen erstreckt und zwischen dem zweiten Ende der Drehfeder und der ersten Nase (142) der zweiten Ventilscheibe angeordnet ist.

2. Sperrventil mit geteilter Klappe nach Anspruch 1, ferner mit einer Hülse, die an der Welle (104) montiert ist, mindestens einen Abschnitt davon umgibt und zwischen der ersten und der zweiten Buchse (114) angeordnet ist.

3. Sperrventil mit geteilter Klappe nach Anspruch 2, wobei der Außendurchmesser der Hülse kleiner als der Innendurchmesser der Drehfeder (112) ist.

4. Sperrventil mit geteilter Klappe nach Anspruch 1, wobei die Drehfeder (112) einen Außendurchmesser hat, der radiale Abschnitt (148) der ersten Buchse jeweils einen Durchmesser hat und der Außendurchmesser der Drehfeder kleiner als der Durchmesser des radialen Abschnitts (148) der ersten Buchse ist.

5. Sperrventil mit geteilter Klappe nach Anspruch 1, wobei die erste Buchse (114) an die erste Nase (138) der ersten Ventilscheibe gekoppelt ist.

6. Sperrventil mit geteilter Klappe nach Anspruch 5, wobei die zweite Buchse (114) an die erste Nase (138) der zweiten Ventilscheibe gekoppelt ist.

7. Sperrventil mit geteilter Klappe nach Anspruch 1, wobei ein erster Abschnitt der Drehfeder (112) an die erste Nase (138) der ersten Ventilscheibe gekoppelt ist und ein zweiter Abschnitt der Drehfeder (112) an die erste Nase (138) der zweiten Ventilscheibe gekoppelt ist.

8. Sperrventil mit geteilter Klappe nach Anspruch 1, wobei
die erste Ventilscheibe (108) eine von der ersten Nase (138) der ersten Ventilscheibe beabstandete zweite Nase (138) aufweist,
die erste Nase (138) der zweiten Ventilscheibe zwischen der ersten und der zweiten Nase (138) der ersten Ventilscheibe angeordnet ist und
die Drehfeder (112) zwischen der ersten Nase (138) der ersten Ventilscheibe und der ersten Nase (138) der zweiten Ventilscheibe angeordnet ist.

9. Sperrventil mit geteilter Klappe nach Anspruch 8, wobei die zweite Ventilscheibe (108) eine zweite Nase (142) aufweist, die außerhalb der ersten und der zweite Nase (138) der ersten Ventilscheibe (108) angeordnet ist.

10. Sperrventil (100) mit geteilter Klappe mit
einem Ventilkörper (102), der einen oder mehrere durch ihn hindurch ausgebildete Strömungsdurchgänge (124) aufweist,
einer an den Ventilkörper (102) gekoppelten Welle (104),
einer ersten Ventilscheibe (108), die drehungsmäßig an der Welle (104) montiert ist und eine erste und eine zweite sich davon erstreckende Nase (138, 140) aufweist, wobei durch jede Nase eine Wellenöffnung ausgebildet ist, durch die sich die Welle (104) erstreckt,
einer zweiten Ventilscheibe (110), die drehungsmäßig an der Welle (104) montiert ist und eine erste und eine zweite sich davon erstreckende Nase (142, 144) aufweist, wobei durch jede Nase eine Wellenöffnung ausgebildet ist, durch die sich die Welle (104) erstreckt, wobei die erste Nase (142) der zweiten Ventilscheibe zwischen der ersten und der zweiten Nase (138, 140) der ersten Ventilscheibe angeordnet ist und einen sich axial erstreckenden Abschnitt und einen sich radial erstreckenden Abschnitt, die daran ausgebildet sind, aufweist,
einer Drehfeder (112) mit einem ersten Abschnitt, der die Welle (104) zwischen den Nasen der ersten und der zweiten Ventilscheibe umgibt, und einem zweiten Abschnitt, der an dem sich axial erstreckenden Abschnitt der ersten Nase (142) der zweiten Ventilscheibe montiert ist, wobei die Drehfeder (112) ein erstes und ein zweites Ende hat, und
einem Buchsenabschnitt (114), der sich von der ersten Nase (138) der ersten Ventilscheibe erstreckt und an der Welle (104) montiert ist, wobei der Buchsenabschnitt (114) einen axialen Abschnitt (146) und einen radialen Abschnitt (148) hat, wobei sich der axiale Abschnitt (146) axial von der ersten Nase (138) der ersten Ventilscheibe erstreckt und zwischen der Drehfeder (112) und der Welle (104) angeordnet ist und sich der radiale Abschnitt (148) vom axialen Abschnitt (146) radial nach außen erstreckt und zwischen der Drehfeder (112) und der ersten Nase (138) der ersten Ventilscheibe angeordnet ist.

## Revendications

1. Soupape à clapet fendue (100) comprenant :
un corps de soupape (102) comportant un ou plusieurs passages d'écoulement (124) formés à travers lui ;
une tige (104) accouplée au corps de soupape (102) ; un premier plateau de soupape (108) monté à rotation sur la tige (104), le premier plateau de soupape (108) comportant une première oreille (138) s'étendant depuis celui-ci et possédant une ouverture de tige la traversant, à travers laquelle s'étend la tige (104) ;
un deuxième plateau de soupape (110) monté à rotation sur la tige (104), le deuxième plateau de soupape (110) comportant une première oreille (142) s'étendant depuis celui-ci et possédant une ouverture de tige la traversant, à travers laquelle s'étend la tige (104), la première oreille (142) du deuxième plateau de soupape étant espacée de la première oreille (138) du premier plateau de soupape ;
un ressort de torsion (112) monté sur la tige (104) et entourant au moins une portion de la tige (104) entre les premières oreilles (138, 142) du premier et du deuxième plateau de soupape (108), le ressort de torsion (112) ayant au moins une première extrémité et une deuxième extrémité ;
une première douille (114) montée sur la tige (104) et ayant une section axiale (146) et une section radiale (148), la section axiale (146) étant disposée entre le ressort de torsion (112) et la tige (104), la section radiale (148) s'étendant radialement vers l'extérieur depuis la section axiale (146) et étant disposée entre la première extrémité du ressort de torsion et la première oreille (138) du premier plateau de soupape ; et
une deuxième douille (114) montée sur la tige (104) et ayant une section axiale (146) et une section radiale (148), la section axiale (146) étant disposée entre le ressort de torsion (112) et la tige (104), et la section radiale (148) s'étendant radialement vers l'extérieur depuis la section axiale (146) et étant disposée entre la deuxième extrémité du ressort de torsion et la première oreille (142) du deuxième plateau de soupape.

2. Soupape à clapet fendue selon la revendication 1, comprenant en outre :
un manchon monté sur la tige (104) et entourant au moins une portion de la tige (104) et étant disposé entre les première et deuxième douilles (114).

3. Soupape à clapet fendue selon la revendication 2, dans laquelle le manchon a un diamètre extérieur qui est inférieur au diamètre intérieur du ressort de torsion (112).

4. Soupape à clapet fendue selon la revendication 1, dans laquelle le ressort de torsion (112) a un diamètre extérieur, la section radiale (148) de la première douille a à chaque fois un diamètre, et le diamètre extérieur du ressort de torsion est inférieur au diamètre de la section radiale (148) de la première douille.

5. Soupape à clapet fendue selon la revendication 1, dans laquelle la première douille (114) est accouplée à la première oreille (138) du premier plateau de soupape.

6. Soupape à clapet fendue selon la revendication 5, dans laquelle la deuxième douille (114) est accouplée à la première oreille (138) du deuxième plateau de soupape.

7. Soupape à clapet fendue selon la revendication 1, dans laquelle :
une première portion du ressort de torsion (112) est accouplée à la première oreille (138) du premier plateau de soupape et une deuxième portion du ressort de torsion (112) est accouplée à la première oreille (138) du deuxième plateau de soupape.

8. Soupape à clapet fendue selon la revendication 1, dans laquelle :
le premier plateau de soupape (108) comporte une deuxième oreille (138) espacée de la première oreille (138) du premier plateau de soupape ;
la première oreille (138) du deuxième plateau de soupape est disposée entre les première et deuxième oreilles (138) du premier plateau de soupape ;
le ressort de torsion (112) est disposé entre la première oreille (138) du premier plateau de soupape et la première oreille (138) du deuxième plateau de soupape.

9. Soupape à clapet fendue selon la revendication 8, dans laquelle le deuxième plateau de soupape (108) comporte une deuxième oreille (142) disposée vers l'extérieur des première et deuxième oreilles (138) du premier plateau de soupape (108).

10. Soupape à clapet fendue (100) comprenant :
un corps de soupape (102) comportant un ou plusieurs passages d'écoulement (124) formés à travers lui ;
une tige (104) accouplée au corps de soupape (102) ; un premier plateau de soupape (108) monté à rotation sur la tige (104), le premier plateau de soupape (108) comportant une première et une deuxième oreille (138, 140) s'étendant depuis celui-ci, chaque oreille possédant une ouverture de tige la traversant, à travers laquelle s'étend la tige (104) ;
un deuxième plateau de soupape (110) monté à rotation sur la tige (104), le deuxième plateau de soupape (110) comportant une première et une deuxième oreille (142, 144) s'étendant depuis celui-ci, chaque oreille possédant une ouverture de tige la traversant, à travers laquelle s'étend la tige (104), la première oreille (142) du deuxième plateau de soupape étant disposée entre la première et la deuxième oreille (138, 140) du premier plateau de soupape et incluant une section s'étendant axialement et une section s'étendant radialement formées sur elle ;
un ressort de torsion (112) comportant une première portion entourant la tige (104) entre les oreilles du premier et du deuxième plateau de soupape, et une deuxième portion montée sur la section s'étendant axialement de la première oreille (142) du deuxième plateau de soupape, le ressort de torsion (112) ayant une première extrémité et une deuxième extrémité ; et
une section de douille (114) s'étendant depuis la première oreille (138) du premier plateau de soupape et montée sur la tige (104), la section de douille (114) ayant une section axiale (146) et une section radiale (148), la section axiale (146) s'étendant axialement depuis la première oreille (138) du premier plateau de soupape et étant disposée entre le ressort de torsion (112) et la tige (104), et la section radiale (148) s'étendant radialement vers l'extérieur depuis la section axiale (146) et étant disposée entre le ressort de torsion (112) et la première oreille (138) du premier plateau de soupape.
